# EUROPEAN PATENT SPECIFICATION

(11) **EP 0 351 863 B1**
(45) Date of publication and mention of the grant of the patent: **24.03.1993**
(21) Application number: 89113376.1
(22) Date of filing: 20.07.1989
(51) Int. Cl.: H04R 1/02, H04M 1/02, H04B 1/08

(54) **Exterior structure for cabinet**
Äussere Struktur für Gehäuse
Structure extérieure de boîtier

(30) Priority: 22.07.1988 JP 183962/88; 23.05.1989 JP 59542/88 U
(43) Date of publication of application: 24.01.1990
(73) Proprietor: SANYO ELECTRIC CO., LTD., Moriguchi-shi, Osaka (JP)
(72) Inventor: Miyai, Hiroyuki, Matsubara-shi Osaka (JP); Yamaguchi, Mutsuo, Osaka (JP); Zushi, Kazutoshi, Hirakata-shi Osaka (JP); Sueyoshi, Tetsushiro, Higashiosaka-shi Osaka (JP)
(74) Representative: Glawe, Delfs, Moll & Partner

(56) References cited:
- BE-A- 424 971
- DE-U- 7 201 262
- FR-A- 2 408 269
- GB-A- 483 419

## Description

### FIELD OF THE INVENTION

The present invention relates to cabinet structures for various devices such as cassette tape playback devices, radio receivers and telephones, and more particularly to an exterior structure for cabinets which comprises a plurality of facing members removably attached to the cabinet and covering the outer surface thereof.

### BACKGROUND OF THE INVENTION

The cabinets of various devices such as cassette tape playback devices are generally unremovably fixed to the body of the device. Manufacturers offer devices of the same type with cabinets of different colors to meet the taste of their customers.

Users of household devices, especially of cassette tape playback devices and like household acoustic devices or telephones and like household communication devices, are fashion-oriented in recent years. Furthermore, these devices are used by infants or children more frequently than before. It is therefore desired that such devices have safety and provide amusement as toys.

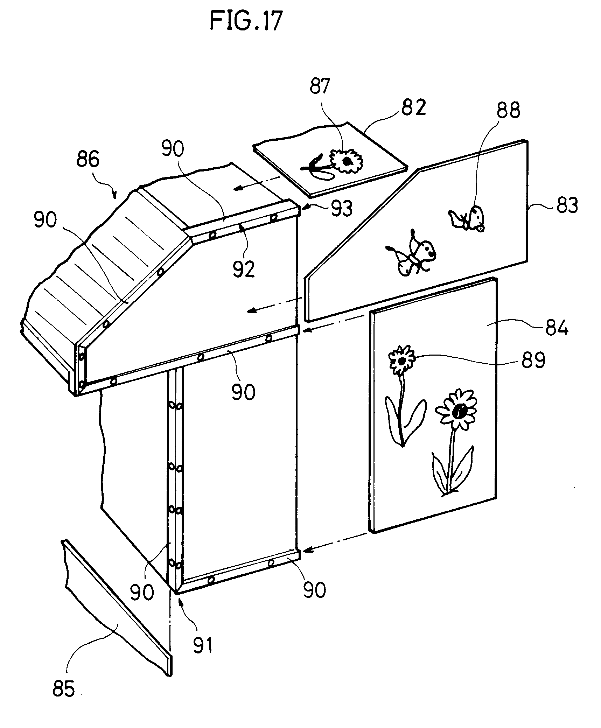

Unexamined Japanese Patent Publication SHO 61-76488 discloses a panel structure for electronic keyboard musical instruments. With reference to Fig. 17, the disclosed panel structure comprises a plurality of flat panels 82, 83, 84 and 85 which are different in shape and size and attached removably to specified portions of the surface of a cabinet 86. Each panel bears a picture 87, 88 or 89 printed on its surface.

The manufacturer prepares and places on sale some kinds of panels with different picture patterns for each shape or size of panel.

Accordingly, the user can select panels of the desired picture pattern when purchasing the musical instrument and thereafter replace the panels by those of different picture pattern additionally purchased.

With the panel structure described, however, the panels differ in shape and are attached to the body of the device at the respective specified positions, so that the panels already attached to the device body can not be replaced by one another for attachment in the specified positions.

Consequently, if it is desired to replace the panels on the device purchased by those of a different picture pattern to give an altered appearance to the device, there arises a need to purchase the desired panels separately sold. It is therefore impossible to change the panels as desired to alter the appearance of the device for amusement.

Further as seen in Fig. 17, the corner of the cabinet 86 has a guide member 90 attached thereto for holding the adjacent panels, so that if the panel structure is used for a device, such as a cassette tape playback device, which is usable even by infants, the sharp edge 91, 92 or 93 of the guide member is likely to injure the infant. Even in the case where fastening means such as screws which are shaped to assure safety are used, flat panels arranged at a right angle with one another in combination to form two or three faces intersecting one another at a right angle form a sharp projection at the intersection. The projection is also likely to cause injuries to the infant, hence the problem of poor safety.

### SUMMARY OF THE INVENTION

An object of the present invention is to provide an exterior structure for the cabinet of a device which structure comprises a plurality of facing members removably attached to the exterior surface of the cabinet, the facing members being identical in configuration and interchangeable in the position of attachment to the cabinet.

Another object of the invention is to provide an exterior structure of the type stated above wherein each of the facing members can be removably attached to the cabinet with corners of the cabinet thereby covered and without forming any sharp projection or the like at the corner of the device.

The exterior structure of the present invention has a plurality of surface segments formed on the surface of a rectangular parallelepipedal cabinet, a plurality of facing members for covering the respective surface segments, and fastening means for removably attaching each of the facing members to the desired one of the surface segments.

Each of the surface segments is formed over a plurality of cabinet faces intersecting one another approximately at a right angle to form corners of the cabinet. The surface segments are identical in three-dimensional configuration.

Each of the facing members comprises a plurality of panel portions intersecting one another approximately at a right angle to cover the surface segment substantially in intimate contact therewith. The facing members are identical in three-dimensional configration.

The fastening means for attaching the facing members to the respective surface segments are made common in construction to render the plurality of facing members interchangeable in the position of attachment. Various known means are usable as the fastening means. For example, each fastening means comprises the combination of a screw provided on the facing member and a threaded bore formed in the cabinet, or lock means provided by a pair of elastic engageable portions formed respectively on the cabinet and the facing member which are made of resin.

As a result, the plurality of facing members are interchangeable freely in the position of attachment to the cabinet. For example, when the facing members are prepared in different colors and replaced by one another and attached to the cabinet in the interchanged positions, the user can enjoy the arrangement of colors on the device with a sense of play.

The facing members cover the body of the device and form no sharp projection unlike the conventional removable panel structure. This ensures safety when the device is used by infants.

To divide the surface of the cabinet into the plurality of surface segments, ribs extend along the boundaries between the segments. This renders the facing members easy to position on the surface segments as specified.

The exterior structure of the present invention is usable for the cabinets of speaker portions provided on opposite sides of cassette tape playback devices, cabinets for sound clocks which notify the time with a sound, telephone cabinets, cabinets for portable radio receivers and cabinets of various other devices.

### BRIEF DESCRIPTION OF THE DRAWINGS

Figs. 1 to 5 show a first embodiment of the invention as applied to a stereo cassette tape playback device;
Fig. 1 is a perspective view showing facing members as removed from cabinets;
Fig. 2 is a perspective view showing the facing members as attached to the cabinets;
Fig. 3 is a front view of a speaker portion with facing members attached thereto;
Fig. 4 is an enlarged view in section taken along the line A-A′ in Fig. 3;
Fig. 5 is a view showing a fastening screw attaching structure;
Fig. 6 is a perspective view showing a second embodiment of the invention as applied to a stereo cassette tape playback device;
Figs. 7 and 8 show a third embodiment of the invention as applied to a sound clock;

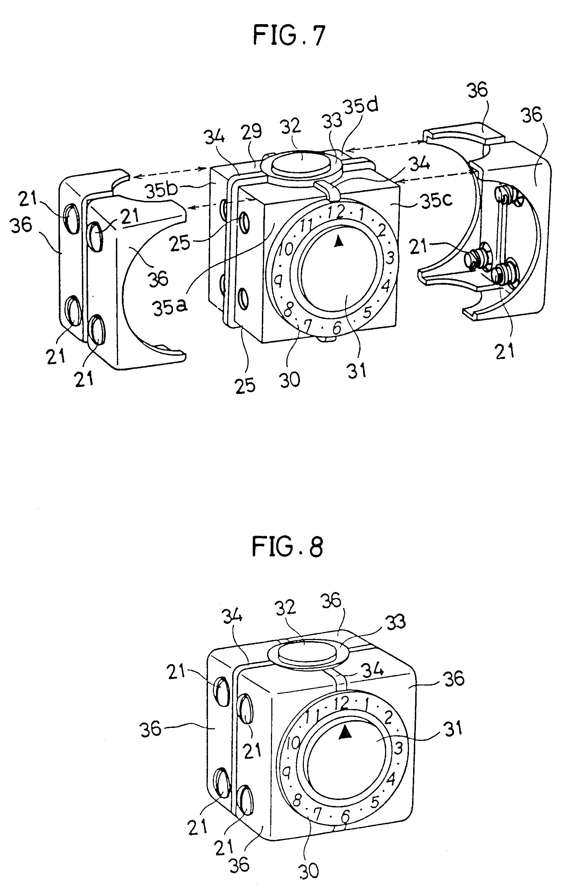

Fig. 7 is a perspective view showing facing members as removed from a cabinet;
Fig. 8 is a perspective view showing the facing members as attached to the cabinet;

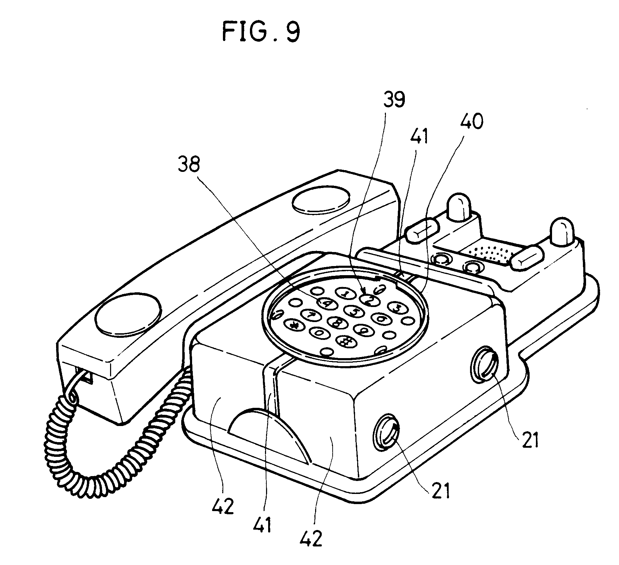

Fig. 9 is a perspective view showing a fourth embodiment of the invention as applied to a telephone;

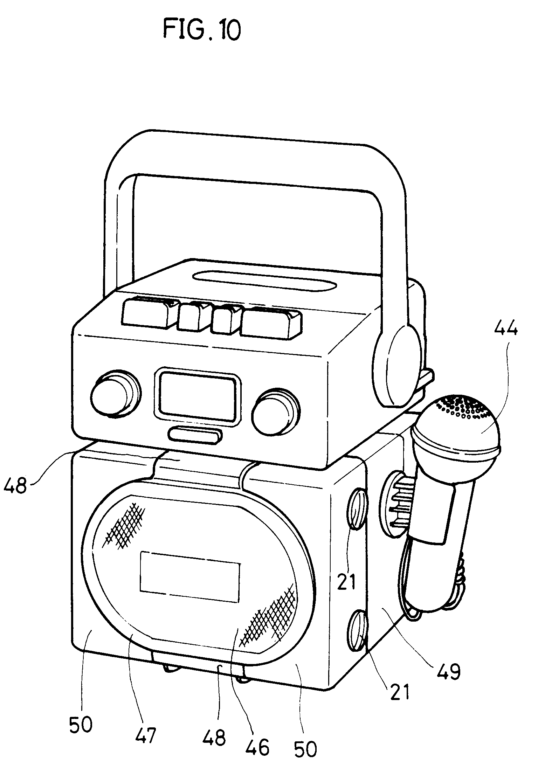

Fig. 10 is a perspective view showing a fifth embodiment of the invention as applied to a cassette tape playback device having a sound mixing function;

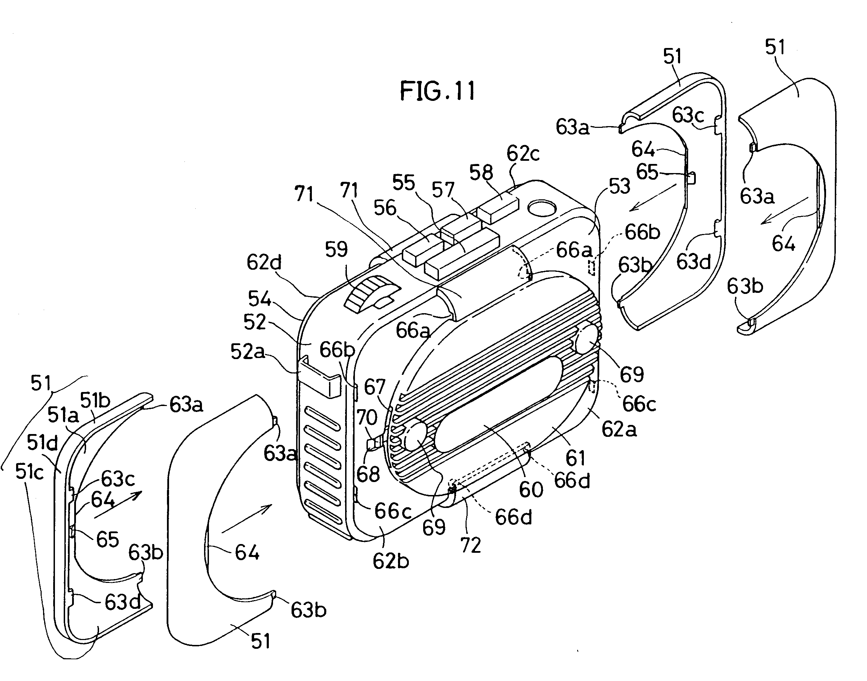

Figs. 11 to 14 show a sixth embodiment of the invention as applied to a portable cassette tape playback device;
Fig. 11 is a perspective view showing facing members as removed from a cabinet;

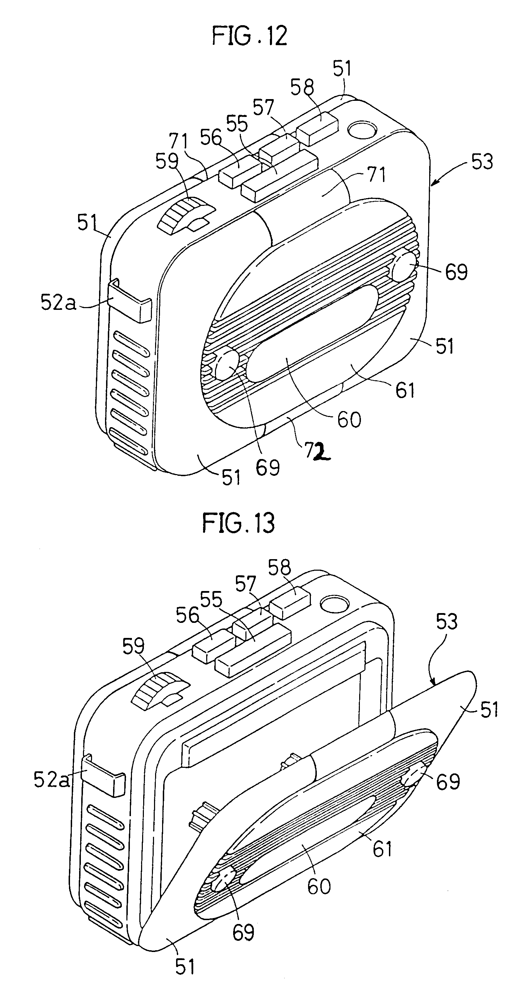

Fig. 12 is a perspective view showing the facing members as attached to the cabinet;
Fig. 13 is a perspective view showing the device of Fig. 12 with its closure opened;

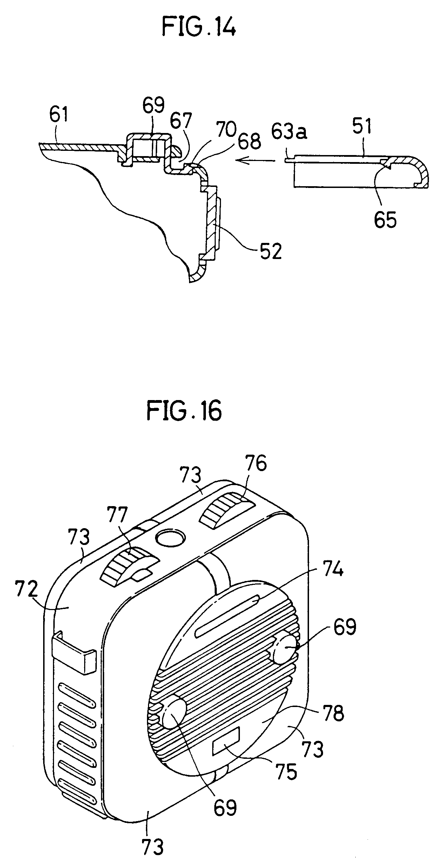

Fig. 14 is a sectional view showing means for locking the facing member to the cabinet;

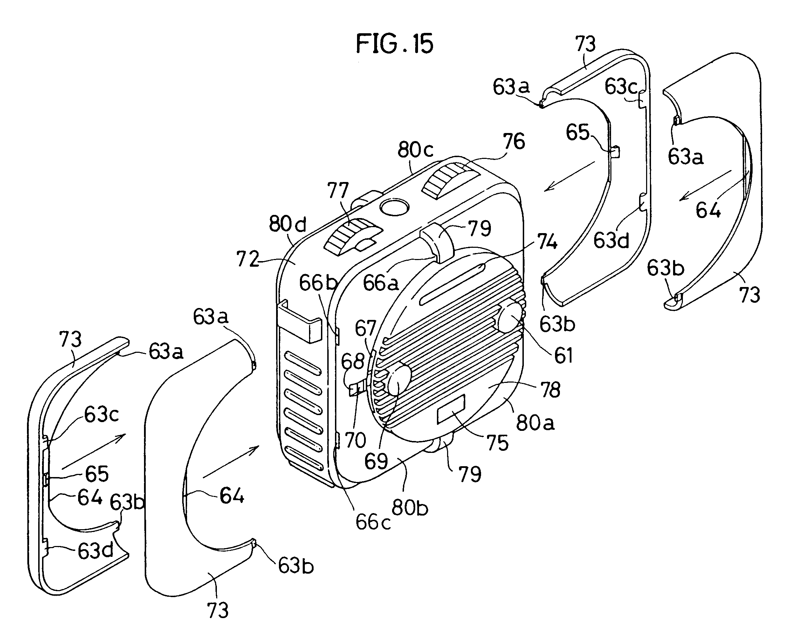

Figs. 15 and 16 show a seventh embodiment of the invention as applied to a portable radio receiver;
Fig. 15 is a perspective view showing facing members as removed from a cabinet;
Fig. 16 is a perspective view showing the facing members as attached to the cabinet; and
Fig. 17 is an exploded perspective view showing a conventional panel structure.

### DETAILED DESCRIPTION OF EMBODIMENTS

Embodiments of the invention will be described below in detail with reference to the drawings.

### First Embodiment

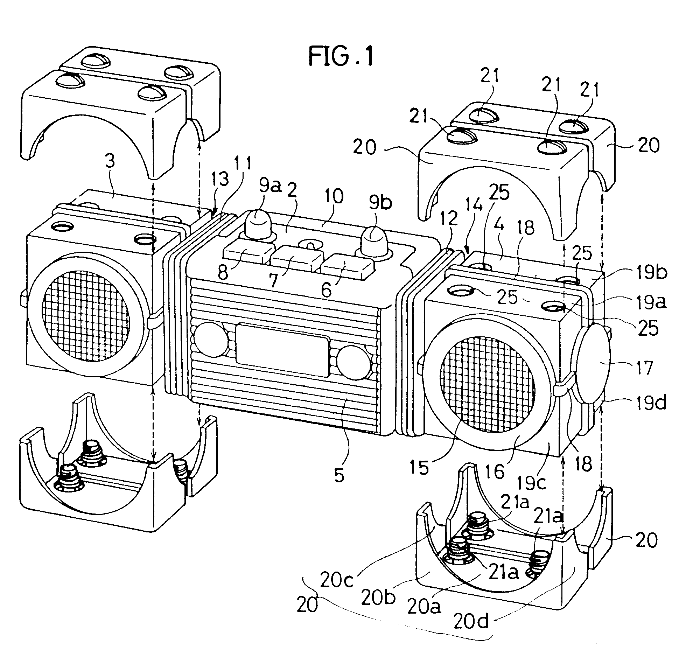

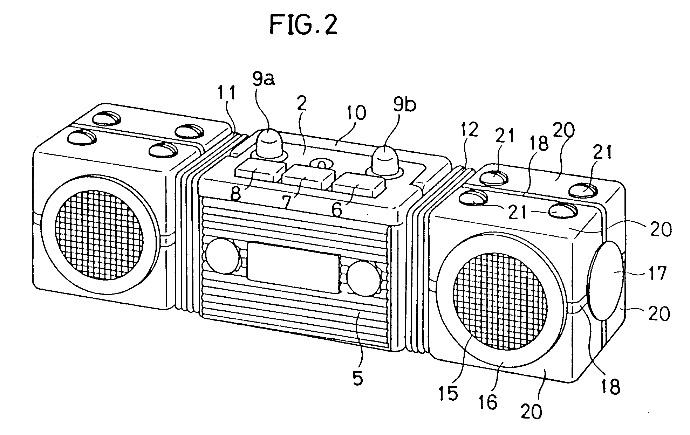

This embodiment is an exterior structure of the invention for a stereo cassette tape playback device as shown in Figs. 1 and 2. The device comprises a central cabinet 2 housing recording-reproduction means, etc. for a cassette tape, and a pair of rectangular parallelepipedal speaker cabinets 3, 4 housing a right-channel speaker and a left-channel speaker, respectively, and connected to opposite sides of the central cabinet 2.

The central cabinet 2 has an openable closure 5 on its front side for closing a tape cassette accommodating portion, and a play button 6, fast-forward button 7, stop button 8 and volume and other control knobs 9a, 9b on its top. The cabinet 2 has pivoted thereto a handle 10 for use in carrying the device.

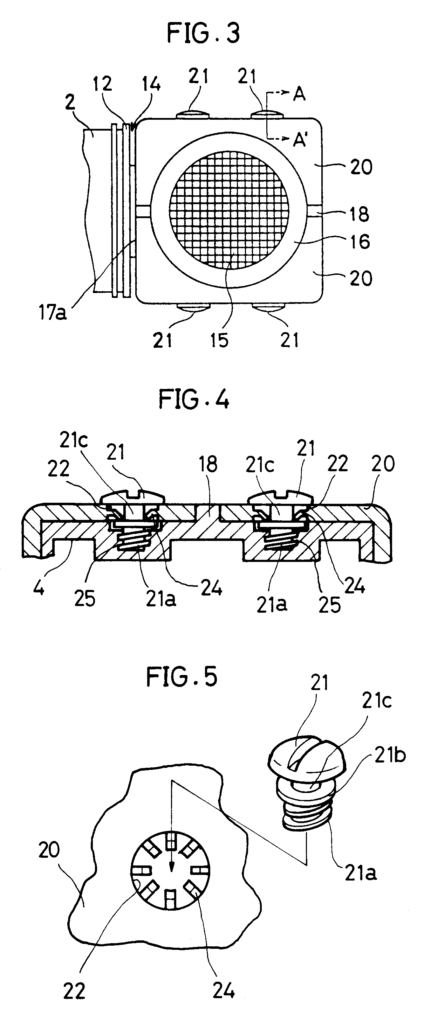

Partition members 11, 12 are integrally formed with the central cabinet 2 on opposite sides thereof. Clearances 13, 14 for permitting insertion of the facing member to be described below from outside thereinto are formed respectively between the partition members 11, 12 and the speaker cabinets 3, 4 (see Fig. 3).

The side speaker cabinets 3, 4 are shaped symmetrically with respect to the central cabinet 2. A description will be given of the speaker cabinet 4 on the right side shown. A first annular rib 16 surrounding a circular speaker sound output portion 15 is formed on the front side of the cabinet 4 centrally thereof. A second annular rib (not shown) having the same shape as the first annular rib is formed on the rear side of the cabinet centrally thereof.

The speaker cabinet 4 is further formed with a first disk rib 17 on its outer side and a second disk rib 17a shaped identically with the rib 17 on its inner side providing the clearance 14 as seen in Fig. 3. The second disk rib 17a is joined directly to the partition member 12 of the central cabinet 2.

The speaker cabinet 4 further has a plurality of linear ribs 18 interconnecting the annular ribs 16 and the disk ribs 17, 17a as seen in Figs. 1 and 2. The four regions surrounded by these ribs 16, 17, 17a and 18 are surface segments 19a, 19b, 19c and 19d which are to be covered with the facing members to be described below. These surface segments each extend over four cabinet faces intersecting one another at a right angle and are shaped identically with one another.

A facing member 20 molded integrally of soft resin and shaped to cover each of the surface segments 19a to 19d in its entirety is removably attached to the surface segment. The facing member 20 comprises first to fourth panel portions 20a, 20b, 20c and 20d fittable to the respective four faces of the surface segment generally in intimate contact therewith. The corners where the panel portions butt against one another are curved with a suitable curvature. The four facing members are identical in configuration. Further the four facing members 20 are different from one another in color. (For example, they are colored in red, blue, yellow and green.) The four facing members can be made different in pattern.

Each facing member 20 has a pair of fastening screws 21, 21 attached to its first panel portion 20a and prevented from slipping off. More specifically stated with reference to Figs. 4 and 5, the first panel portion 20a of the facing member 20 is formed with screw holes 22, and a plurality of retaining pieces 24 extend inward from the inner periphery defining each of the holes 22. The fastening screw 21 has a threaded portion 21a, and a flange 21b provided between this portion 21a and its head. The flange 21b has a diameter greater than the outside diameter of the threaded portion 21a and is slightly larger than the central opening defined by the tips of the retaining pieces 24. Accordingly, the fastening screw 21 can be held to the facing member 20 rotatably against slipping off by inserting the flange 21b through the central opening utilizing the elasticity of the retaining pieces 24 and causing the retaining pieces 24 to engage with the shank 21c of the screw 21 between the head and the flange 21b. The head of the screw 21 has a groove serving as a portion for rotating the screw.

On the other hand, the speaker cabinet 4 is formed with a pair of screw bores 25, 25 for the threaded portions 21a of the two screws 21 on each facing member 20 to fit in, the bores 25 being positioned in corresponding relation with the respective screws 21.

The speaker cabinet 3 on the left side shown in Fig. 1 is also provided with the same exterior structure as above which comprises surface segments and facing members.

Accordingly, eight facing members 20 can be removably attached to the speaker cabinets 3, 4 as shown in Figs. 1 and 2 by fitting these facing members 20 to the respective surface segments 19a, 19b, 19c, 19d of the cabinets 3, 4 and driving the fastening screws 21 on the facing members 20 into the respective screw bores 25 in the speaker cabinets with a coin or specific driver fitted in the head groove of each screw 21. At this time, the panel portions 20c of the facing members positioned closer to the central cabinet 2 are inserted into the corresponding clearance 13 or 14 between the central cabinet 2 and the speaker cabinet 3 or 4, with the end face of each facing member 20 bearing on the corresponding rib 16, 17, 17a or 18 on the cabinet 3 or 4, whereby the inner surface of each facing member is brought into substantially intimate contact with the outer surface of the speaker cabinet.

The eight facing members 20 thus attached to the cabinets 3, 4 can be removed from the cabinets 3, 4 after loosening the fastening screws 21, replaced by one another and attached to the respective surface segments of the speaker cabinets again in interchanged positions. Consequently, the opposite speakers have a color pattern or arrangement different from the previous one to assume an altered esthetic appearance.

### Second Embodiment

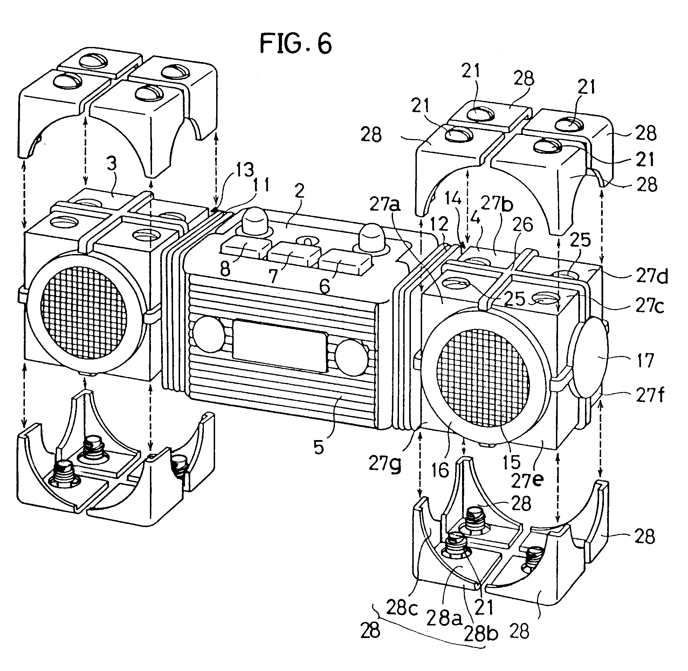

With reference to Fig. 6, this embodiment has eight surface segments on the surface of each of speaker cabinets 3, 4 of a cassette tape playback device.

The embodiment will be described with reference to the speaker cabinet 4 on the right side. The cabinet is formed on its surface with annular ribs 16, disk ribs 17 and a plurality of linear ribs 26 interconnecting these ribs. Of these linear ribs, the two ribs on each of the upper and lower surfaces of the cabinet intersect each other crosswise. These ribs 16, 17, 18 surround eight regions which are surface segments 27a, 27b, 27c, 27d, 27e, 27f, 27g (the eighth segment can not be seen in Fig. 6). Each of these surface segments extends over three cabinet faces intersecting one another at a right angle. The segments are shaped identically with one another.

Each of facing members 28 comprises first to third panel portions 28a, 28b and 28c substantially intimately fittable to three surface segments. The corners where the panel portions butt against one another are each formed with a curved surface with a suitable curvature. The eight facing members 28 are identical in configuration but are different from one another in color and have fastening screws 21 attached thereto.

The exterior structure described above enables the user to enjoy a wider variety of color patterns than is the case with the first embodiment.

### Third Embodiment

This embodiment is adapted for use with a sound clock as seen in Figs. 7 and 8. A cabinet 29 housing clock means and sound generating means is generally cubic in external shape. The front side of the cabinet 29 is centrally formed with a first annular rib 30 marked with time graduations, and an alarm setting dial 31 inside the rib 30. A second annular rib (not shown) shaped identically with the first annular rib 30 is formed on the rear side of the cabinet.

Provided on the top side of the cabinet 29 are a first disk rib 33 and a push button 32 inside the rib 33 to be depressed when a time notifying sound is to be produced. Formed on the bottom side of the cabinet is a second disk rib (not shown) identical with the first disk rib in shape.

The cabinet 29 further has a plurality of linear ribs 34 interconnecting the annular and disk ribs 30, 33. These ribs 30, 33, 34 surround four regions which provide surface segments 35a, 35b, 35c, 35d of an identical shape.

Facing members 36 have exactly the same construction as the facing members 20 of the first embodiment shown in Fig. 1, are removably attached to the respective surface segments and can be replaced by one another for attachment in interchanged positions to give an altered color pattern.

### Fourth Embodiment

As shown in Fig. 9, exactly the same exterior structure as the above embodiment can be used for telephones.

The telephone cabinet is formed on its top side with an annular rib 40 around a circular operation panel 39 which is provided with a plurality of dial push buttons 38. On opposite sides of the annular rib 40 and linear ribs 41, 41 extending forward and rearward from the rib 40, a pair of facing members 42, 42 having the same construction as those of the first or third embodiment are removably attached to the cabinet.

The two facing members 42, 42 can be replaced by each other to give a different appearance to the telephone.

### Fifth Embodiment

Fig. 10 shows a cassette tape playback device for an infant to enjoy singing to the accompaniment of playback of a cassette tape. The device has the function of mixing the input voice signal from a microphone 44 connected to the device body with the signal reproduced from the cassette tape to produce a sound from its speaker.

An exterior structure similar to the foregoing embodiments is used also for the device. The device has a lower cabinet housing the speaker. The cabinet has a first elliptical rib 47 formed on its front side and extending around a speaker sound output portion 46, a second elliptical rib (not shonw) identical with the first rib 47 in shape and formed on the cabinet rear side, first strip ribs 48, 48 extending from these elliptical ribs to the top and bottom sides of the cabinet, and second strip ribs 49 extending vertically on opposite side walls of the cabinet to the top and bottom sides thereof. Four facing members 50 identical in configuration are removably attached to the respective four regions surrounded by the ribs.

### Sixth Embodiment

With reference to Figs. 11 to 13, this embodiment comprises facing members 51 which are different in configuration from those of the above embodiments and which are removably attached to the cabinet 52 of a portable compact cassette tape playback device.

The cabient 52 is in the form of a flat rectangular parallelepiped and has a front panel 53 and a back panel 54 which have an area in conformity with the size of the tape cassette to be used. The front panel 53 is openable to serve as a closure for loading and unloading the cassette. The cabinet 52 has on its top side a play button 55, fast-forward button 56, rewind button 57, stop button 58 and volume control knob 59. The cabinet has an earphone jack (not shown) and a belt attaching member 52a at its side portions.

The front panel 53 has an elliptical first projection 61 which is centrally formed with a transparent window 60 for the user to recognize the presence or absence of the tape cassette. The back panel 54 is also formed with a second projection identical with the first projection in shape. Each of the front and back panels 53, 54 is further formed with strip ribs 71, 72 extending upward and downward from the projection.

Consequently, the two panels 53, 54 are formed on their surfaces with four surface segments 62a, 62b, 62c and 62d at opposite sides of the projections and the ribs. Each of these segments has a U-shaped planar region extending in parallel to the cabinet face having the projection, and a curved region continuous with the planar region along its outer periphery. The four surface segments are identical in configuration. The corner of the cabinet 52 along its top, bottom and lateral sides thereof around the outer periphery of each surface segment 62a, 62b, 62c or 62d is recessed by a dimension slightly larger than the thickness of the ribs 71, 72 as seen in Fig. 11.

A facing member 51 integrally molded of soft resin is removably attached to each of the surface segments 62a to 62d. The facing member 51 comprises a first panel portion 51a substantially intimately fittable to the planar region of the surface segment, and second to fourth panel portions 51b, 51c, 51d so curved as to substantially intimately fit to the curved region of the segment. The four facing members 51 are identical in configuration but are different from one another in color. These facing members can be marked with different patterns.

The first and fourth panel portions 51a and 51d of the facing member 51 have first and second lugs 63a, 63b, and third and fourth lugs 63c, 63d, respectively, projecting from their ends toward the direction of insertion of the facing member relative to the cabinet. The first panel portion 51a centrally has a thin plate portion 64 which is formed with a hook 65 projecting from its inner surface.

On the other hand, each of the front panel 53 and the back panel 54 is formed with first to fourth slits 66a, 66b, 66c, 66d for the respective first to fourth lugs 63a to 63d of each facing member 51 to fit in, and with a cutout 67 for the thin plate portion 64 to fit in when the facing member 51 is attached to the cabinet. A groove 68 is formed in each panel 53 or 54 in communication with the cutout 67 for the hook 65 on the facing member to fit in.

The projection 61 of the front panel 53 is provided with a pair of push buttons 69, 69 as elastically supported at the respective ends of the projection and each having its head exposed for manipulation. Projecting from the push button 69 is a claw 70 engageable with the hook 65 of the facing member as seen in Fig. 14. The claw 70 is retracted into the groove 68 when the push button 69 is depressed.

The back panel 54 of the cabinet 52 is also provided with the same push buttons and claws (not shown) as above.

When each facing member 51 is to be attached to the cabinet 52, the lugs 63a to 63d of the facing member 51 are inserted into the respective slits 66a to 66d in the cabinet as indicated by an arrow in Fig. 11, and the facing member 51 further pushed in the direction of insertion. In this step, the hook 65 of the member 51 depresses the head of the claw 70 on the cabinet through a cam action, elastically deforming the push button 69, and is eventually engaged with the claw 70 while permitting the push button 69 to elastically return to its projected position. Consequently, the facing member 51 is unseparably attached to the cabinet 52 as shown in Fig. 12.

The two facing members 51, 51 attached to the front panel 53 opens and closes the tape loaded portion along with the front panel 53 as shown in Figs. 12 and 13.

Each facing member 51 can be removed from the cabinet 52 by depressing the push button 69 to release the hook 65 from the claw 70 and withdrawing the facing member 51 from the cabinet 52 in this state. Thus, the facing member is easily removable from the cabinet.

The four facing members 51 removed from the cabinet 52 can be attached to the respective surface segments 62a to 62d again in desired interchanged positions.

### Seventh Embodiment

With reference to Figs. 15 and 16, the same exterior structure as the above embodiment can be used also for a portable radio receiver.

The cabinet 72 of the receiver is provided on its top side with a tuning dial 76 for adjusting the receiver to the received frequency and a volume control dial 77. The front side of the cabinet 72 is provided with a circular first projection 78 and ribs 79, 79 extending upward and downward from the projection. The projection 78 has a tuning indicator 74 for indicating the received frequency and a time display 75.
A second projection (not shown) identical with the first projection in shape is formed on the rear side of the cabinet. Consequently, the cabinet has four surface segments 80a, 80b, 80c and 80d which are identical in shape to those of the sixth embodiment.

The four facing members 73 to be attached to the surface segments have the same configuration as those of the sixth embodiment and are different from one another in color. Furthermore, the means for locking the facing member to the cabinet 72 has exactly the same construction as the means included in the sixth embodiment, so that throughout the drawings showing the sixth and seventh embodiemnts, like parts are designated by like reference numerals or symbols and will not be described again.

With any of the foregoing embodiments, a plurality of facing members which are different from one another in color are attached to the respective surface segments formed on the cabinet of the contemplated device interchangeably in the position of attachment, so that especially when the device is used by infants, the device can be handled with the same sense as when dressing up dolls or building blocks for the infant to enjoy a wide variety of color patterns or arragnements.

Since the facing members have corners which are rounded with a smooth curved surface, the device having the facing members attached thereto is rounded in its entirety and has no external sharp corners. The facing members which are made of soft resin obviate the likelihood that the device will cause injuries when handled by infants, hence safety.

The cabinet has the ribs dividing its surface into segments, so that each facing member can be pressed against the rib and thereby positioned in place easily before it is attached to the surface segment.

The exterior structure can be made usable in common for different kinds of devices as is the case with the first, third, fourth and fifth embobidments, or with the sixth and seventh embodiments. This makes it possible to interchange the facing members between these devices for the user to enjoy a wide variety of colors on a system comprising such devices in combination, further contributing a great deal to a manufacturing cost reduction.

With the first to fifth embodiments, the fastening screws are prevented from slipping off and therefore will not become lost even when the device is handled by infants. Further according to the sixth and seventh embodiments, even the infant can readily interchange the facing members by depressing the push buttons and pushing each facing member into the cabinet.

The exterior structure of the present invention is not limited to the foregoing embodiments but can of course be modified variously by one skilled in the art without deparing from the scope of the invention as defined in the appended claims.

For example, the number of surface segments on the cabinet is not limited to those used in the embodiments but can be any desired number.

## Claims

1. An exterior structure for a cabinet (3, 4, 29, ...), the exterior structure having a plurality of surface segments formed over the outer surface of the cabinet, a plurality of facing members (20, 28, 36..) for removably covering the respective surface segments substantially in intimate contact therewith, and fastening means (21) for removably attaching each of the facing members to the desired one of the surface segments, characterised by, each of the surface segments extending over a plurality of cabinet faces forming corners of the cabinet, the surface segments being identical in configuration, each of the facing members comprising a plurality of panel portions (19a, 19b...) corresponding to the respecttive cabinet faces forming the corners of the cabinet, the facing members being identical in configuration and interchangeable with respect to the position of attachment to the surface segment.

2. An exterior structure as defined in claim 1 wherein the corners of the facing member where the panel portions thereof butt against one another are each formed with a smooth curved surface.

3. An exterior structure as defined in claim 1 wherein the outer surface of the cabinet is formed with upright walls extending over the overall area of the surface segments and to be in bearing contact with the end face of each facing member.

4. An exterior structure as defined in claim 1 wherein the fastening means comprises a screw (21) rotatably held to the facing member against slipping off, a screw bore formed in the cabinet for the screw to be screwed in and a rotating portion formed in the screw.

5. An exterior structure as defined in claim 1 wherein the facing members are different from one another in color or pattern provided thereon.

6. An exterior structure as defined in claim 1 wherein the cabinet is each of a pair of opposite speaker cabinets (3, 4; Fig.3) of a stereo cassette tape playback device, and the outer surface of each speaker cabinet has four or eight surface segments over the region thereof other than the speaker sound output portion and the portion of connection between the speaker cabinet and the body of the device to be loaded with a cassette tape.

7. An exterior structure as defined in claim 1 wherein the cabinet is the cabinet (29; Fig.7) of a sound clock for telling the time with a sound when a push button is depressed and has four or eight surface segments over the outer surface thereof other than the regions where the push button and an alarm setting dial are provided.

8. An exterior structure as defined in claim 1 wherein the cabinet is the cabinet of a telephone and has two or four surface segments over the outer surface thereof other than the region where an operation panel (39; Fig.9) having push buttons is provided.

9. An exterior structure as defined in claim 1 wherein the cabinet is the speaker cabinet of a cassette tape playback device having a sound mixing function and is formed with four or eight surface segments over the outer surface thereof other than the speaker sound output portion and the portion of connection between the speaker cabinet and the body of the device to be loaded with a tape cassette.

10. An exterior structure as defined in claim 1 wherein the cabinet includes the cabinets of different kinds of devices, and the device cabinets are formed with surface segments of the same size and configuration, facing members of the same size and configuration being attachable to the cabinets interchangeably between the devices.

11. An exterior structure for a cabinet, the exterior structure having a plurality of surface segments (53, 62a...) formed over the outer surface of the cabinet, a plurality of facing members (51; Fig.11) for removably covering the respective surface segments substantially in intimate contact therewith, and fastening means (63a, 66a...) for removably attaching each of the facing members to the desired one of the surface segments, characterised by each of the surface segments having a planar region (53, 54) and a curved region (62a, 62b...) extending continuously with the planar region and forming a corner portion of the cabinet, the surface segments being identical in configuration, each of the facing members comprising a panel portion (51a) substantially intimately fittable to the planar region of the cabinet and a plurality of panel portions (51b, 51c, 51d) having an arcuate cross section and substantially intimately fittable to the curved region of the cabinet, the facing members being identical in configuration and interchangeable with respect to the position of attachment to the surface segment.

12. An exterior structure as defined in claim 11 wherein the outer surface of the cabinet is formed with upright walls extending over the overall area of the surface segments and to be in bearing contact with the end face of each facing member.

13. An exterior structure as defined in claim 11 wherein the fastening means comprises an engageable portion (65) provided on one of the cabinet and the facing member, an engaging claw (70) elastically shiftably provided on the other for releasably engaging the engageable portion by virtue of the elasticity, and a manipulating button (69) for elastically shifting the engaging claw to release the engageable portion from the engaging claw.

14. An exterior structure as defined in claim 13 wherein the facing member is provided with a plurality of lugs (63a, 63b...) projecting toward the direction of engagement with the cabinet, and the cabinet is formed with a plurality of holes (66a, 66b...) for the respective lugs to fit in.

15. An exterior structure as defined in claim 11 wherein the facing members are different from one another in color or pattern provided thereon.

16. An exterior structure as defined in claim 11 wherein the cabinet is the cabinet (52; Fig.11) of a portable cassette tape playback device, and the surface segments are formed on a front panel (53) and a back panel (54) constituting the cabinet, the front panel being openable for loading and unloading a cassette tape.

17. An exterior structure as defined in claim 11 wherein the cabinet is the cabinet (72; Fig.15) of a portable radio receiver, and the surface segments are formed on a front panel and a back panel constituting the cabinet.

18. An exterior structure as defined in claim 11 wherein the cabinet includes the cabinets of different kinds of devices, and the device cabinets are formed with surface segments of the same size and configuration, facing members of the same size and configuration being attachable to the cabinets interchangeably between the devices.

## Patentansprüche

1. Äußere Struktur für ein Gehäuse (3, 4, 29, ...) mit einer Vielzahl von Oberflächensegmenten, die auf der Außenfläche des Gehäuses ausgebildet sind, einer Vielzahl von Deckflächen (20, 28, 36, ...) zum lösbaren Abdecken des jeweiligen Oberflächensegments im wesentlichen in engem Kontakt damit, und Befestigungsmitteln (21) zum lösbaren Befestigen jedes Deckelements an einem der Oberflächensegmente, dadurch **gekennzeichnet,** daß jedes der Oberflächensegmente sich über eine Vielzahl von Gehäuseflächen, die Ecken des Gehäuses bilden, erstreckt, daß die Oberflächensegmente identisch in der Konfiguration sind, daß jedes der Deckteile eine Vielzahl von Tafelteilen (19a, 19b, ...) aufweist, die den jeweiligen Gehäuseflächen entsprechen, die die Ecken des Gehäuses formen, und daß die Deckteile identisch in der Konfiguration sind und austauschbar in ihrer Befestigungsposition an dem Oberflächensegment.

2. Struktur nach Anspruch 1, bei welcher die Ecken der Deckteile, in welchen die Tafelteile aneinander anliegen, jeweils mit einer glatten gekrümmten Oberfläche ausgebildet sind.

3. Struktur nach Anspruch 1, bei welcher die Außenfläche des Gehäuses mit aufrechtstehenden Wandungen ausgebildet ist, die sich über die Gesamtfläche der Oberflächensegmente erstrecken und in tragendem Kontakt mit der Endfläche jedes Deckteils stehen.

4. Struktur nach Anspruch 1, bei welcher die Befestigungsmittel eine Schraube (21) aufweisen, die drehbar gehalten ist am Deckteil gegen Herausgleiten, eine Schraubenbohrung, die im Gehäuse für das Einschrauben der Schraube ausgebildet ist und ein an der Schraube ausgebildetes Drehteil.

5. Struktur nach Anspruch 1, bei welcher die Deckteile voneinander unterschiedlich in Farbe oder darauf angebrachtem Muster sind.

6. Struktur nach Anspruch 1, bei welcher das Gehäuse je ein Paar von gegenüberliegenden Lautsprechergehäusen (3, 4, Fig. 3) eines Stereokassettenrekorders ist, und worin die Außenfläche jedes Lautsprechergehäuses vier oder acht Oberflächensegmente über den Bereich außerhalb des Lautsprecherklangausgangsteils und des Verbindungsteils zwischen dem Lautsprechergehäuse und dem Korpus der Vorrichtung, die mit einem Kassettenband beladen werden soll, aufweist.

7. Struktur nach Anspruch 1, bei welcher das Gehäuse das Gehäuse (29, Fig. 7) einer Klanguhr ist, welche die Zeit mit einem Klang ansagt, wenn ein Druckknopf gedrückt wird, und vier oder acht Oberflächensegmente aufweist über seine Außenfläche außerhalb des Bereichs, wo der Druckknopf und eine Alarmsetzwählscheibe vorgesehen sind.

8. Struktur nach Anspruch 1, bei welcher das Gehäuse das Gehäuse eines Telefons ist und zwei oder vier Oberflächensegmente aufweist über die Außenfläche außerhalb des Bereichs, in welchem eine Bedienungsfläche (39, Fig. 9) mit Druckknöpfen vorgesehen ist.

9. Struktur nach Anspruch 1, bei welcher das Gehäuse das Lautsprechergehäuse eines Kassettenplaybackspielers ist, welcher eine Klangmischfunktion hat, und ausgebildet ist mit vier oder acht Oberflächensegmenten über die Außenfläche außerhalb des Lautsprecherklangausgangsbereichs und des Verbindungsbereichs zwischen Lautsprechergehäuse und dem Gerätekörper, in welchem eine Bandkassette geladen wird.

10. Struktur nach Anspruch 1, bei welcher das Gehäuse die Gehäuse von unterschiedlichen Arten von Geräten enthält und die Gerätegehäuse ausgebildet sind mit Oberflächensegmenten der gleichen Größe und Konfiguration, wobei Deckteile der gleichen Größe und Konfiguration austauschbar zwischen den Geräten an des Gehäusen anbringbar sind.

11. Äußere Stuktur für ein Gehäuse mit einer Vielzahl von Oberflächensegmenten (53, 62a, ...), die auf der Außenfläche des Gehäuses ausgebildet sind, einer Vielzahl von Deckflächen (51, Fig. 11) zum lösbaren Abdecken des jeweiligen Oberflächensegments im wesentlichen in engem Kontakt damit, und Befestigungsmitteln (63a, 66a, ...) zum lösbaren Befestigen jedes Deckelements an einem der Oberflächensegmente, dadurch **gekennzeichnet,** daß jedes der Oberflächensegmente einen planen Bereich (53, 54) und einen gekrümmten Bereich (62a, 62b) aufweist, welcher sich stetig mit dem planen Bereich erstreckt und einen Eckenteil des Gehäuses bildet, daß die Oberflächensegmente identisch in ihrer Konfiguration sind, daß jedes der Deckteile ein Tafelteil (51a) aufweist, welches im wesentlichen nahe am planen Bereich des Gehäuses anpaßbar ist und daß eine Vielzahl von Tafelteilen (51b, 51c, 51d) einen gebogenen Querschnitt aufweist und im wesentlichen eng anbringbar sind an dem gekrümmten Bereich des Gehäuses, daß die Deckteile identisch in der Konfiguration sind und austauschbar in ihrer Position der Befestigung am Oberflächensegment.

12. Struktur nach Anspruch 11, bei welcher die Außenfläche des Gehäuses ausgebildet ist mit aufrechtstehenden Wandungen, die sich über die Gesamtfläche der Oberflächensegmente erstreckt und in tragendem Kontakt mit der Endfläche jedes Deckteils sind.

13. Struktur nach Anspruch 11, bei welcher die Befestigungselemente einen Eingriffsteil (65) aufweisen, der am Gehäuse oder dem Deckteil vorgesehen ist, wobei eine elastisch schiebbare Eingriffsklaue (70) am anderen der beiden vorgesehen ist, um lösbar in Eingriffsteil aufgrund der Elastizität einzugreifen, und wobei ein Betätigungsknopf (69) zum elastischen Verschieben der Eingriffsklaue vorgesehen ist, um den Eingriffsteil von der Eingriffsklaue zu lösen.

14. Struktur nach Anspruch 13, bei welcher das Deckteil versehen ist mit einer Vielzahl von Ansätzen (63a, 63b), die in Richtung des Eingriffs mit dem Gehäuse vorspringen, und das Gehäuse ausgebildet ist mit einer Vielzahl von Ausnehmungen (66a, 66b, ...) zum Einpassen der jeweiligen Ansätze.

15. Struktur nach Anspruch 11, bei welcher die Deckteile in Farbe oder darauf vorgesehenem Muster unterschiedlich sind.

16. Struktur nach Anspruch 11, bei welcher das Gehäuse das Gehäuse (52, Fig. 11) eines tragbaren Kassettenrekorder ist und die Oberflächensegmente auf einer Fronttafel (53) und einer Rücktafel (54) ausgeformt sind, welche das Gehäuse bilden, wobei die Fronttafel zum Be- und Entladen der Bandkassette geöffnet werden kann.

17. Struktur nach Anspruch 11, bei welcher das Gehäuse das Gehäuse (72, Fig. 15) eines tragbaren Radioempfängers ist und die Oberflächensegmente auf einer Fronttafel und einer Rücktafel, die das Gehäuse bilden, ausgebildet sind.

18. Struktur nach Anspruch 11, bei welcher das Gehäuse die Gehäuse verschiedener Arten von Geräten enthält, und die Gehäusegeräte ausgebildet sind mit Oberflächensegmenten der gleichen Größe und Konfiguration, wobei Deckteile der gleichen Größe und Konfiguration austauschbar zwischen den Geräten an den Gehäusen befestigbar sind.

## Revendications

1. Structure extérieure pour boîtier (3, 4, 29, ...), cette structure extérieure comportant une pluralité de segments de surface formés sur la surface extérieure du boîtier, une pluralité d'éléments de façade (20, 28, 36, ...) destinés à recouvrir de façon amovible les segments de surface respectifs en étant en contact sensiblement intime avec eux, et des moyens de fixation (21) pour fixer de façon amovible chaque élément de façade au segment souhaité, **caractérisée** en ce que chaque segment de surface s'étend sur une pluralité de pans du boîtier qui forment les angles du boîtier, les segments de surface ayant une configuration identique, chaque élément de façade contenant une pluralité de panneaux (19a, 19b, ...) qui correspondent aux pans respectifs du boîtier formant les angles du boîtier, les éléments de façade ayant une configuration identique et étant interchangeables pour ce qui est de leur emplacement de fixation au segment de surface.

2. Structure extérieure selon la revendication 1, dans laquelle les angles de l'élément de façade où les panneaux aboutent les uns aux autres forment une surface à courbe régulière.

3. Structure extérieure selon la revendication 1, dans laquelle la surface extérieure du boîtier est formée de parois verticales qui s'étendent sur toute la superficie des segments de surface et qui seront en contact d'appui avec la face d'extrémité de chaque élément de façade.

4. Structure extérieure selon la revendication 1, dans laquelle les moyens de fixation comprennent une vis (21) maintenue en pouvant tourner sur l'élément de façade pour ne pas en pouvoir glisser, un trou de vis formé dans le boîtier pour y visser la vis, et une partie tournante formée dans la vis.

5. Structure extérieure selon la revendication 1, dans laquelle les éléments de façade diffèrent les uns des autres par leur couleur ou par le dessin qu'ils portent.

6. Structure extérieure selon la revendication 1, dans laquelle le boîtier est constitué par chaque boîtier (3, 4 ; figure 3) d'une paire de haut-parleurs situés des deux côtés d'un appareil stéréophonique de reproduction d'une cassette à bande magnétique, et la surface extérieure de chaque boîtier de haut-parleur comporte quatre ou huit segments de surface sur sa superficie autre que la partie par où sort le son du haut-parleur et la partie de liaison entre le boîtier du haut-parleur et le corps de l'appareil dans lequel sera placée la cassette à bande magnétique.

7. Structure extérieure selon la revendication 1, dans laquelle le boîtier est constitué par le boîtier (29 ; figure 7) d'une horloge sonore qui annonce l'heure par un son quand on appuie sur un bouton-poussoir et comprend quatre ou huit segments de surface sur sa surface extérieure autre que les endroits où sont placés le bouton-poussoir et le cadran servant à régler l'alarme.

8. Structure extérieure selon la revendication 1, dans laquelle le boîtier est constitué par le boîtier d'un téléphone et comprend deux ou quatre segments de surface sur sa surface extérieure autre que la région dans laquelle se trouve un tableau de commande (39 ; figure 9) muni de boutons-poussoirs.

9. Structure extérieure selon la revendication 1, dans laquelle le boîtier est constitué-par le boitier du haut-parleur d'un appareil de reproduction de cassette à bande magnétique comportant une fonction de mixage du son, et est formé de quatre ou huit segments de surface sur sa surface extérieure autre que la partie par où sort le son du haut-parleur et la partie de liaison entre le boîtier du haut-parleur et le corps de l'appareil dans lequel sera placée la cassette à bande magnétique.

10. Structure extérieure selon la revendication 1, dans laquelle le boîtier inclut des boîtiers de différents types d'appareil, et les boîtiers de ces appareils sont formés de segments de surface ayant la même taille et la même configuration, des éléments de façade de même taille et de même configuration pouvant être fixés aux boîtiers de façon interchangeable entre les appareils.

11. Structure extérieure pour boîtier, cette structure extérieure comportant une pluralité de segments de surface (53, 62a, ...) formés sur la surface extérieure du boîtier, une pluralité d'éléments de façade (51 ; figure 11) pour recouvrir de façon amovible les segments de surface respectifs en étant sensiblement en contact intime avec eux, et des moyens de fixation (63a, 66a, ...) pour fixer de façon amovible chaque élément de façade au segment souhaité, **caractérisée** en ce que chaque segment de surface comporte une région plane (53, 54) et une région courbe (62a, 62b, ...) qui s'étend continûment à la région plane et qui forme une partie d'angle du boîtier, les segments de surface ayant une configuration identique, chaque élément de façade comprenant une partie de panneau (51a) ajustable de façon sensiblement intime sur la région plane du boîtier, et une pluralité de panneaux (51b, 51c, 51d) de section transversale courbe et ajustables de façon sensiblement intime sur la région courbe du boîtier, les éléments de façade ayant une configuration identique et étant interchangeables pour ce qui est de leur emplacement de fixation aux segments de surface.

12. Structure extérieure selon la revendication 11, dans laquelle la surface extérieure du boîtier est formée de parois verticales qui s'étendent sur toute la superficie des segments de surface et qui seront en contact d'appui avec la face d'extrémité de chaque élément de façade.

13. Structure extérieure selon la revendication 11, dans laquelle les moyens de fixation comprennent une partie accrochable (65) placée sur l'un du boîtier ou de l'élément de façade, une griffe accrochante (70) déplaçable élastiquement, placée sur l'autre, pour saisir de façon libérable la partie accrochable grâce à son élasticité, et un bouton de manipulation (69) pour déplacer élastiquement la griffe accrochante afin de libérer la partie accrochable de la griffe accrochante.

14. Structure extérieure selon la revendication 13, dans laquelle l'élément de façade est pourvu d'une pluralité de tenons (63a, 63b, ...) qui font saillie vers la direction d'accrochage avec le boîtier, le boîtier comportant une pluralité de trous (66a, 66b, ...) pour y emboîter les tenons respectifs.

15. Structure extérieure selon la revendication 11, dans laquelle les éléments de façade diffèrent les uns des autres par leur couleur ou par le dessin qu'ils portent.

16. Structure extérieure selon la revendication 11, dans laquelle le boîtier est constitué par le boîtier (52 ; figure 11) d'un appareil portable de reproduction d'une cassette à bande magnétique, et les segments de surface sont formés sur un panneau avant (53) et un panneau arrière (54) qui constituent le boîtier, le panneau avant pouvant être ouvert pour introduire et retirer une cassette à bande magnétique.

17. Structure extérieure selon la revendication 11, dans laquelle le boîtier est constitué par le boîtier (72 ; figure 15) d'un récepteur radio portable, et les segments de surface sont formés sur un panneau avant et un panneau arrière qui constituent le boîtier.

18. Structure extérieure selon la revendication 11, dans laquelle le boîtier inclut des boîtiers de différents types d'appareils, et les boîtiers de ces appareils sont formés de segments de surface ayant la même taille et la même configuration, des éléments de façade de même taille et de même configuration pouvant être fixés aux boîtiers de façon interchangeable entre les appareils.
